# DEMANDE DE BREVET EUROPEEN

(11) **EP 0 594 470 A1**
(43) Date de publication de la demande: **27.04.1994**
(21) Numéro de dépôt: 93402206.2
(22) Date de dépôt: 10.09.1993
(51) Int. Cl.: C22B 13/02, C22B 7/00

(54) **Procédé de récupération de plomb, provenant notamment de la matière active de batteries usagées et four électrique destiné notamment à mettre en oeuvre le procédé**

(30) Priorité: 11.09.1992 FR 9210849
(71) Demandeur: METALEUROP S.A., F-94120 Fontenay-sous-Bois (FR)
(72) Inventeur: Bied-Charreton, Benoît, F-69400 Villefranche Sur Saone (FR); Chabry, Pierre, F-78310 Maurepas (FR); Lecadet, Jacques, F-75014 Paris (FR); Pasquier, Patrice, F-60500 Chantilly (FR)
(74) Mandataire: Warcoin, Jacques

(57) **Abrégé**

1. Procédé de récupération du plomb, provenant notamment de résidus solides, ledit procédé comprenant successivement dans un four électrique (1) à électrodes immergées les étapes suivantes
a) fusion peu réductrice des fines, en présence d'une faible quantité de carbone de façon à séparer le plomb d'oeuvre (8) d'une part, une scorie riche en plomb (7) d'autre part à éliminer le soufre sous forme de dioxyde de soufre, et, éventuellement, récupération du plomb d'oeuvre
b) réduction de la scorie riche en plomb par une quantité de carbone appropriée de façon à séparer d'une part une scorie réduite sensiblement exempte de plomb et du plomb d'oeuvre.
c) récupération du plomb d'oeuvre des étapes b) et éventuellement a).

Elle concerne également un four électrique à électrode immergée pour mettre en oeuvre le procédé.

## Description

L'invention concerne un procédé de récupération de plomb, provenant notamment de la matière active de batteries usagées. Elle concerne également un four électrique destiné notamment à mettre en oeuvre le procédé.

Désormais, la principale application industriellement significative du plomb réside dans son utilisation en tant que matériau de constitution des batteries.

Par ailleurs, du fait de l'importance du marché des batteries, on estime qu'environ 50% de la production du plomb provient du recyclage de ce métal présent dans les batteries.

De façon générale, la batterie usagée est constituée de plomb (métallique faiblement allié, sous forme de sulfate ou d'oxydes), de plastiques et d'acide sulfurique, l'impureté majeure étant le soufre.

Le procédé requérant le moins de manipulation consiste à charger telles quelles les batteries dans un haut fourneau identique à ceux utilisés en première fusion et à récupérer le soufre soit sous forme de gaz (S0₂) mais malheureusement sous forme très diluée, soit en modifiant le réglage réducteur du four, dans une matte ferreuse, ce qui présente de nombreux inconvénients quant à son stockage éventuel dans les décharges.

Tous les autres procédés nécessitent un tri physique préalable commençant par le concassage en présence d'eau des batteries, permettant la séparation du plomb métallique (cosses et grilles), du plastique et des fines. Les fines quant à elles, sont constituées pour 70 à 80% par du plomb dont notamment environ la moitié se trouve sous forme de sulfate à cause du caractère usagé de la batterie, le reste de ce plomb se trouve principalement à l'état d'oxydes et éventuellement pour une faible proportion, à l'état métallique. Les autres composants des fines, en dehors du plomb et du soufre, sont des particules de plastiques provenant de l'imperfection des moyens de séparation, ainsi qu'un peu de silice.

A la connaissance du déposant, plusieurs procédés de récupération sont actuellement mis en oeuvre à partir des fines de batteries telles qu'obtenues comme indiqué ci-dessus.

Un premier procédé consiste à piéger le soufre dans une scorie sodique (par ajout de sodium et de fer). Cette scorie ayant un bas point de fusion (850-950°C) peut-être facilement éliminée et l'utilisation d'un four simple rotatif est suffisante. Néanmoins, la scorie sodique est relativement instable, ce qui rend difficile à terme son stockage dans une décharge.

Un second procédé consiste à lixivier les fines de batteries avec une solution de carbonate de sodium pour séparer le carbonate de plomb de façon quantitative de la solution de sulfate de soude qui est éliminée. Le carbonate de plomb est ensuite traité dans une unité appropriée. L'élimination ou la valorisation du sulfate de soude est cependant difficile.

Un troisième procédé consiste à fondre dans un four réverbere en milieu oxydant, les fines pour produire du plomb d'oeuvre et une scorie riche en plomb (PbO) puis à réduire dans un four électrique ladite scorie.

Néanmoins, le S0₂ produit lors de la première étape est très dilué et couteux à piéger ou à récupérer.

D'autres documents décrivent un procédé faisant intervenir un four électrique de réduction.

Le document FR-A-2 414 558 décrit un procédé d'extraction de métaux non-ferreux contenus dans des scories et autres sous-produits métallurgiques contenant des métaux non-ferreux à l'état de composés, dans lequel on traite ces matières à l'état fondu en les chauffant par résistance dans un four électrique à électrodes immergées, sous une couche d'agent réducteur solide et en insufflant un gaz non- oxydant dans la matière fondue de façon à produire un brassage efficace de ladite matière, caractérisé en ce qu'on insuffle le gaz non oxydant à un débit compris entre 0,5 et 10 Nm³/heure/tonne de matière traitée.

Ce procédé nécessite donc l'obtention préalable des scories, à faible teneur en soufre, dans un autre four, et fait intervenir un brassage par insufflation de gaz.

Le document FR-A-2 297 254 propose une réduction, en une étape dans un four à induction, d'une boue de plomb, après en avoir éliminé l'eau, par mélange avec du carbone pulvérulent anhydre de façon à provoquer la dissociation des composés de plomb (péroxyde de plomb Pb0₂, sulfate de plomb PbS0₄) et à extraire ensuite l'anhydride sulfureux des gaz de réaction. Il est indiqué page 3, que la quantité de coke ajoutée représente de 2 à 9% par rapport au produit séché ; une telle plage de réglage correspondra à des degrés de réduction et à des taux d'élimination du soufre très différents ; ce procédé qui ne comporte qu'une étape, présente l'inconvénient de ne pouvoir simultanément obtenir une scorie présentant une faible teneur en plomb et un bon rendement d'élimination du soufre.

Il est indiqué dans la description à la page 2, lignes 5 à 10, que ce procédé permet d'augmenter de plusieurs fois la teneur relative en S0₂ des gaz par rapport aux procédés connus, ce facteur permettant non seulement de dépoussiérer de manière simple le gaz à la sortie du four, mais, de plus, permettant d'en séparer facilement le 80₂.

Il s'agit en effet d'un objectif majeur de tout procédé destiné à retraiter les fines de batteries et à récupérer le plomb de celles-ci. A la connaissance du déposant, ce procédé ne peut pas être utilisé industriellement pour traiter les produits indiqués, en réalisant à la fois l'élimination du soufre et une scorie appauvrie en plomb.

Le document US 4 571 261 propose également une réduction en une seule étape d'une boue de plomb par chauffage par bruleur et forte agitation et dégagement correspondant de l'anhydride sulfureux.

De même avec un tel procédé il n'est pas possible d'obtenir simultanément une scorie présentant une faible teneur en plomb et un bon rendement d'élimination du soufre.

Le document FR-A-2 342 345 décrit un procédé de traitement de résidus de plomb à l'état non dissous, produits lors de la production de zinc électrolytique. Le plomb est en majorité sous la forme de sulfate et se trouve présent dans les résidus dans une proportion variant de 10 à 60%. Ledit procédé comprend l'addition directe, simultanée et essentiellement continue dans un four électrique à électrodes partiellement immergées
a) des résidus de plomb,
b) d'un agent réducteur contenant du carbone,
c) des fondants pour produire une scorie contenant du FeO, du CaO et du Si0₂ ; et

le maintien de la température de la couche de scorie fondue dans le four électrique dans l'intervalle de 1000°-1500°C pour produire au moins deux couches séparées de la phase fondue dans ledit four, l'une desdites couches étant une couche de scorie, et l'autre desdites couches étant une couche de plomb d'oeuvre ; et

la récupération provenant de ce four d'un plomb d'oeuvre contenant moins de 1,1 % de soufre et d'une scorie contenant pas plus de 4% de plomb.

Ce procédé présente néanmoins les inconvénients suivants dans le cas de la récupération du plomb des fines de batteries :
Le réglage réducteur indiqué, qui correspond à un potentiel d'oxygène équivalent à 4% de plomb dans la scorie, ne permet pas dans le cas des fines de batteries, d'éliminer suffisamment de soufre dans les gaz, sous forme de S0₂ et entraîne, en conséquence, la conservation d'une quantité importante voire de la totalité du soufre dans les produits fondus, sous la forme d'une matte difficilement séparable de la scorie ou, en tous les cas, difficile à retraiter ou à stocker.

Le brevet européen EP-B-196800 décrit un procédé de récupération du plomb à partir de fines de batterie contenant de l'oxyde de plomb, du sulfate de plomb et de l'antimoine à l'état oxydé, consistant à réduire en présence de coke les fines de batteries dans un four à lance immergé puis dans une seconde étape à réduire la scorie obtenue lors de la première étape.

Toutefois, ce procédé ne permet pas le dégagement du dioxyde de soufre à une concentration telle qu'une récupération économiquement satisfaisante puisse être envisagée.

En pratique, le procédé décrit dans ce document nécessite l'élimination préalable d'une grande partie des sulfates, notamment par traitement chimique.

L'invention a pour but de pallier les inconvénients précédemment décrits en volatilisant la quasi-totalité du soufre dans les gaz, sous forme de S0₂ dans une première étape. Elle a par ailleurs pour but :
- d'obtenir ce gaz S0₂ sous une forme concentrée afin d'en faciliter sa récupération,
- de produire une scorie stable pouvant être stockée dans la nature en respectant l'environnement ou même réemployée à des usages de construction dans le génie civil ou le bâtiment,
- de réduire de manière importante les quantités de poussières produites soit par la volatisation du plomb et de ses composés, soit par les en- volements lors du chargement des fines.

D'autres avantages de la présente invention apparaîtront au cours de la description qui va suivre.

Selon l'invention, le procédé comprend successivement dans un four électrique à électrodes immergées, les étapes suivantes :
a) fusion peu réductrice des fines, notamment de batteries usagées, en présence d'une faible quantité de carbone de façon à séparer le plomb d'oeuvre d'une part, une scorie riche en plomb d'autre part, à éliminer le soufre sous forme de dioxyde de soufre, et, éventuellement, récupération du plomb d'oeuvre,
b) réduction de la scorie riche en plomb par une quantité de carbone appropriée de façon à séparer d'une part une scorie réduite sensiblement exempte de plomb et du plomb d'oeuvre ;
c) récupération du plomb d'oeuvre des étapes b) et éventuellement a).

Le procédé de la présente invention est mis en oeuvre de façon convenable dans un four électrique à électrodes submergées. Ce four est bien connu de l'homme de métier et fonctionne par passage du courant électrique à travers la phase de scorie (chauffage par effet Joule). Les électrodes en graphite de celui- ci sont partiellement immergées dans la phase de scorie. Ce four peut comprendre une ou plusieurs électrodes selon les cas.

Avantageusement, le soufre est éliminé par dégagement d'un mélange gazeux constitué de dioxyde de carbone et d'une forte proportion de dioxyde de soufre.

Avantageusement, l'étape a) permet d'assurer l'élimination de la quasi-totalité du soufre sous forme de S0₂ concentré à des teneurs de 20 à 40% dans les gaz secs, sortant de la charge avant dilution éventuelle due aux petites entrées d'air parasites, en mélange avec le C0₂ provenant de la réaction des oxydes par le carbone.

La température de la matière à l'intérieur du four est généralement comprise entre 700 et 1500°C. La temprérature du four est adaptée, par modification de la puissance électrique, au point de fusion de la phase de scories qui se trouve à l'intérieur. Ainsi, la première étape s'effectuera généralement à une température comprise entre 600 et 1100°C (de préférence 700-1100°C), bien qu'une température plus élevée soit envisageable encore que peu nécessaire.

La température du four lors de la seconde étape est comprise entre 900 et 1500°C généralement. Il est possible de faire face à l'augmentation du point de fusion de la scorie provoquée par son appauvrissement en plomb et d'atteindre des scories à haut point de fusion, donc plus stables vis-à-vis de l'environnement, que celles qui peuvent être fondues dans des fours immobiles ou rotatifs chauffés au mazout ou au gaz et où les températures maximales sont limitées.

Bien que le procédé selon l'invention soit particulièrement adapté à la récupération du plomb contenu dans les fines de batteries, il permet de traiter en général des mélanges complexes de métaux comprenant des oxydes et des sulfates. Ce procédé concerne aussi bien le traitement des matières ayant des teneurs élevées en métaux que des produits dans lesquels les métaux sont en faibles quantités.

A titre indicatif, le procédé est adapté au traitement des résidus et des sous-produits de la métallurgie des métaux non-ferreux tels que :
- les sous-produits à base de sulfate de plomb issus des industries de fabrication des accumulateurs au plomb,
- les résidus des usines d'électrolyse du zinc contenant du plomb, du zinc, du fer et d'autres métaux, ainsi que du soufre sous forme de sulfate,
- les poussières issues des usines d'incinération d'ordures ménagères.

Dans le domaine du recyclage, il s'agit principalement du recyclage des produits issus de la récupération et du cassage des accumulateurs au plomb tels qu'ils ont été mentionnés dans l'exposé de l'art antérieur.

On rappellera qu'il s'agit principalement des produits fins issus du cassage et des produits métalliques issus également du cassage de batterie ou de la récupération de "vieux plombs".

Selon une variante du procédé selon la présente invention, on traite une matière humide ayant la composition suivante en résidus solides (en pourcentage en poids) :
- plomb 10 à 95%
- soufre (principalement sous forme de sulfate) 1 à 12%
- carbone 0 à 10%
- matières scorifiables comme la silice (sous forme de Si0₂) ou la chaux 0 à 80%

le pourcentage restant étant constitué par l'oxygène des oxydes, ainsi que d'autres métaux comme l'antimoine, l'étain, l'arsenic etc..., des éléments présents, autres que le carbone, dans les composés organiques (chlore).

Le procédé selon l'invention convient particulièrement au traitement des fines à haute teneur en plomb (supérieur à 60%) ; notamment aux fines de
batteries. Généralement ces fines de batteries comprennent environ plus de 40% de Pb S0₄.

Selon une variante de la présente invention, ces fines de batteries auront la composition suivante en poids :
- plomb 60 à 90%,
- soufre 2 à 8%,
- carbone 0 à 4%,

le pourcentage restant étant constitué de l'oxygène, d'autres métaux comme l'antimoine, des éléments présents dans les composés organiques et de matières scorifiables.

Du fait que les résidus de plomb telles que les fines de batteries, sont habituellement séparées des liqueurs de traitement par des procédés classiques, il en découle qu'une certaine quantité d'eau reste présente dans la matière à traiter. Il est conseillé de sécher ces résidus de plomb jusqu'à ce qu'il présentent une teneur en humidité de moins de 10% et encore mieux, inférieure à 5% et de préférence de l'ordre de 2 à 3% avant le chargement dans le four électrique. Ceci permet d'éliminer les éventuels risques d'explosion et de moussage qui pourraient se produire dufait du dégagement de quantités excessives de vapeur d'eau. Néanmoins, on prendra soin de conserver une certaine teneur en humidité afin d'éviter les envole- ments de poussières lors du chargement. Egalement, l'invention permet de charger les produits sans autre préparation que le préséchage indiqué ci-dessus, ou en incluant dans ce procédé de séchage des opérations de mise en forme par pressage à chaud ou à froid, ou par nodulisation en présence d'eau ou de boue.

Des sources appropriées de l'agent réducteur contenant du carbone sont avantageusement choisies parmi le coke, le coke de pétrole, un poussier de coke (c'est-à-dire du coke finement subdivisé), du graphite, du noir de carbone, du charbon de bois, de l'anthracite ou les charbons en général.

Par une fusion peu réductrice, on entend une fusion de fines dans laquelle la quantité de carbone ajoutée ou déjà présente dans la matière à traiter est telle que le rapport atomique oxygène sur carbone du gaz produit par cette réduction est plus grand que 1, de préférence supérieur à 1,5 et avantageusement supérieur à 1,95.

Sur un plan pratique, la quantité de l'agent réducteur contenant le carbone utilisé dans la première étape du procédé selon la présente invention, est réglée afin d'obtenir une scorie dont la teneur en plomb soit de 10 à 60% et de préférence de 35 à 50% ; pour des fines de batteries contenant 60 à 90 % de plomb sous forme de sulfates ou d'oxydes, cette teneur en carbone, y compris le carbone provenant des matières organiques contenues dans les fines, est comprise entre 2 et 4%, environ 3%. Lors de cette étape peu réductrice, ce type de réglage et le potentiel thermodynamique d'oxygène ainsi obtenu dans la scorie, qui est relié à l'activité de l'oxyde de plomb dans ladite scorie, permet d'oxyder sous forme de S0₂ le soufre présent.

Ainsi, le procédé de la présente invention apporte une méthode nouvelle et élégante de traitement de résidus de plomb, permettant le dégagement du dioxyde de soufre à une concentration telle qu'une récupération ultérieure soit possible au moindre coût. Par exemple, le S0₂ peut être neutralisé et servir à la fabrication de gypse, ou peut être dirigé dans une unité de fabrication d'acide sulfurique.

En même temps que le dégagement du mélange gazeux, on observe une séparation de phase entre une phase supérieure de scorie et une phase inférieure de plomb d'oeuvre comprenant moins de 2% de soufre et de préférence moins de 1 %.

Au fur et à mesure de l'alimentation du four en fines de batteries, on récupère donc simultanément une part importante du plomb sous forme de métal et on constitue progressivement une couche de scorie riche en plomb. Lorsque celle-ci atteint une épaisseur importante, l'introduction de matière est arrêtée et remplacée par une addition de carbone distribué à la surface du bain fondu, permettant de constituer un lit flottant sur le bain de scorie, afin de réaliser l'étape de réduction de la scorie précédant sa coulée et d'en séparer le plomb sous forme d'un plomb d'oeuvre.

La quantité de carbone ajoutée pour cette étape de réduction est fonction de la quantité d'oxyde de plomb que l'on souhaite réduire, ainsi que de la durée de ces réactions, ainsi il est avantageux d'ajouter de 5 à 30% en poids de carbone par rapport à la quantité d'oxyde de plomb présente dans le four. La source de carbone utilisée peut être similaire à celle décrite lors de la première étape avec préférablement une granulométrie plus grossière correspondant à des particules de 3 à 15 mm.

La scorie obtenue à la fin de cette seconde étape, a une teneur en plomb qui peut être abaissée facilement en dessous de 1%, et même 0,3% ce qui autorise un stockage ou des applications sans risque pour l'environnement.

Lors de la première étape, des fondants sont ajoutés aux fines afin d'obtenir la composition de scorie souhaitée, en corrigeant les fluctuations dans les quantités de matières scorifiables apportées par les fines, principalement, de la silice. La composition de scorie visée est choisie afin d'obtenir une fluidité permettant les vitesses appropriées de transfert de masse et de réaction, une conductibilité électrique suffisante au passage du courant, un pouvoir corrosif minimum vis-à-vis des réfractaires.

De façon préférée, le fondant sera à base d'un mélange d'oxyde de fer, de chaux et éventuellement de silice bien que cet élément soit déjà présent dans le cas des fines de batteries.

Le procédé peut être effectué en continu en alternant dans le même four les phases de chargement des matières premières dans des conditions peu réductrices, et de coulée du plomb d'oeuvre ainsi obtenu, avec des phases sans alimentation de fines où la réduction de la scorie est réalisée en remplaçant l'alimentation de matières par un agent réducteur à la fin de ces périodes, la scorie appauvrie est coulée en ne laissant que l'epaisseur minimale pour la dissipation de la puissance électique.

La présente invention a également pour objet un four électrique à électrodes immergées permettant de mettre en oeuvre le procédé selon la présente invention tel qu'il vient d'être décrit précédemment.

Le dispositif selon l'invention est constitué d'une cuve comportant une ou plusieurs électrodes à une profondeur telle qu'elle se trouve immergée dans la phase de scorie au cours du procédé, un ou plusieurs moyens d'évacuation de la phase de scorie, un ou plusieurs moyens d'évacuation du plomb d'oeuvre, et des moyens d'introduction des différents constituants permettant de mettre en oeuvre le procédé.

Selon une variante avantageuse permettant de faciliter la récupération du plomb d'oeuvre, la cuve comprend une zone de siphon comportant éventuellement le retour de courant.

L'invention sera maintenant décrite en liaison avec une description d'exemples précis de réalisation et d'un schéma d'un dispositif de mise en oeuvre.

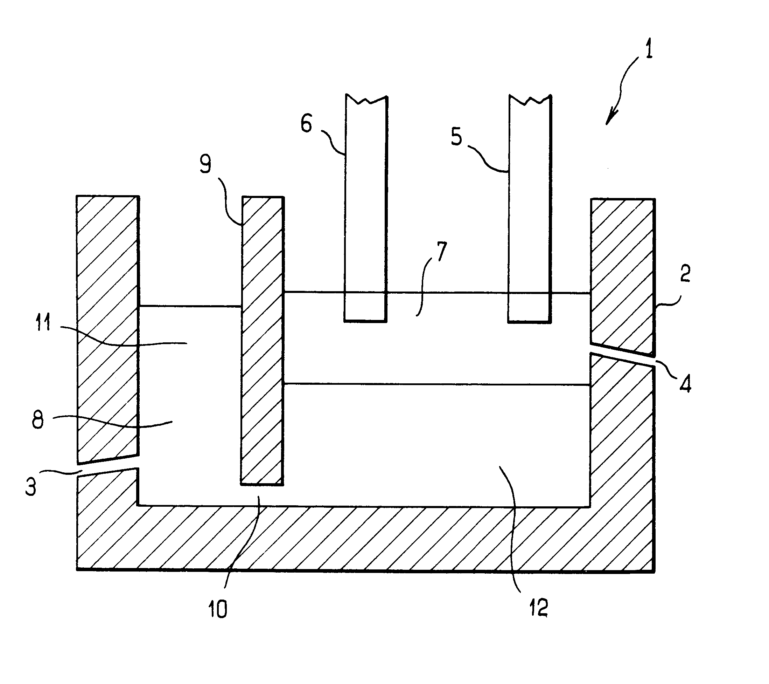

La figure unique représente une coupe schématique d'un four électrique selon l'invention.

Le four électrique 1 comprend une cuve 2 muni près de sa base d'un orifice d'évacuation 3 du plomb d'oeuvre 8 et à mi-hauteur diamétralement opposé un orifice d'évacuation 4 de la phase de scorie 7.

Une paroi interne 9 laissant un passage 10 au fond de la cuve delimite une zone de siphon 11 où est situé l'orifice 3 et une zone de fusion 12 où est situé l'orifice 4.

Deux électrodes 5 et 6 dans la zone de fusion 12 plongent dans cette cuve jusqu'à mi-hauteur de manière à être en contact sur une épaisseur suffisante avec la phase de scorie. L'évacuation des gaz s'effectue par un conduit approprié.

Selon une variante non figurée, une électrode 5 peut être placée dans la zone de siphon.

### Exemple 1 : Description d'un type de marche oxydante

Pour 1 t de matières chargées dont la composition est :
- Pb 70,9%
- S 5,4%
- Sb 0,5%
- Fe 0,6%
- Si0₂ 1,1%
- CaO 0,7%
- C 2%

Les ajouts nécessaires à la mise en oeuvre du procédé sont :
- 20 kg de FeO pour une tonne de matière
- 5 kg de Si0₂ pour une tonne de matière
- 10 kg de carbone pour une tonne de matière Dans ces conditions, le four produit les flux suivants pour une tonne de matières premières :
- plomb d'oeuvre 625 kg à 0,6% de soufre
- gaz 100 Nm³ (64% de C0₂ et 36% de S0₂)
- poussières 50 kg à 70% de plomb et 9,6% de soufre.

La scorie oxydée qui s'accumule dans le four représente 70 Kg et est composée de :
- FeO 23,0%
- Si0₂ 18,7%
- CaO 8,3%
- PbO 50,0%

Pour un four de 0,5 m² alimenté à 100 kg/h, la puissance nécessaire s'établit à 50 kw compte tenu des pertes thermiques par les entrées d'air parasite et les parois qui représentent 18 kw. La résistance moyenne entre l'électrode et le métal atteint dans ces conditions 8 m ohm.

### Exemple 2 : Etape oxydante

Avec les mêmes matières et les mêmes conditions de marche que dans l'exemple 1, le passage d'un ajout de carbone de 10 kg/t à 25 kg/t permet de diminuer la teneur en plomb de la scorie à 30%, ce qui augmente la teneur en soufre du plomb d'oeuvre à 1,5% et nécessite une température de coulée supérieure à 950°C.

### Exemple 3 : Etape réductrice

A partir d'un bain de scorie fondue, riche en plomb, issue de la première étape oxydante, la réduction avec une addition de carbone à la surface du bain se déroule dans les conditions suivantes :
- quantité de scorie présente 650 kg
- épaisseur de la couche de scorie 25 cm
- teneur en plomb de la scorie avant réduction 30%
- quantité de carbone ajoutée 28 kg
- durée de la réduction 8 h
- teneur finale en plomb 0,41%

## Revendications

1. Procédé de récupération du plomb, provenant notamment de résidus solides, ledit procédé comprenant successivement dans un four électrique à électrodes immergées les étapes suivantes :
a) fusion peu réductrice des fines, en présence d'une faible quantité de carbone de façon à séparer le plomb d'oeuvre d'une part, une scorie riche en plomb d'autre part, à éliminer le soufre sous forme de dioxyde de soufre et, éventuellement, récupération du plomb d'oeuvre
b) réduction de la scorie riche en plomb par une quantité de carbone appropriée de façon à séparer d'une part une scorie réduite sensiblement exempte de plomb et du plomb d'oeuvre.
c) récupération du plomb d'oeuvre des étapes
b) et éventuellement a).

2. Procédé de récupération du plomb selon la revendication 1, caratérisé en ce que le soufre est éliminé par dégagement d'un mélange gazeux constitué de dioxyde de carbone et d'une forte proportion de dioxyde de soufre.

3. Procédé selon l'une des revendications 1 ou 2, caractérisé en ce que l'étape a) permet d'assurer l'élimination de la quasi-totalité du soufre sous forme de S0₂ concentré à des teneurs de 20 à 40%, en mélange avec le C0₂ provenant de la réaction des oxydes par le carbone.

4. Procédé selon la revendication 1, caractérisé en ce que la température de l'étape a) est comprise entre 600 et 1100°C, de préférence entre 700°C et 1100°C et la température de l'étape b) est comprise entre 900 et 1500°C.

5. Procédé selon la revendication 1, caractérisé en ce que le carbone provient de matières telles que le coke, le coke de pétrole, le poussier de coke, le graphite, le noir de charbon, le charbon de bois, l'anthracite ou les charbons en général.

6. Procédé de récupération de plomb selon la revendication 1, caractérisé en ce qu'on traite une matière humide ayant la composition suivante en résidus solide (en pourcentage en poids).
- plomb 10 à 95%
- soufre (principalement sous forme de sulfate) 1 à 12%
- carbone 0 à 10%
- matières scorifiables 0 à 80%
le pourcentage restant étant constitué par l'oxygène, ainsi que d'autres métaux, des éléments présents, autres que le carbone, dans les composés organiques.

7. Procédé de récupération du plomb selon l'une des revendications précédentes, caractérisé en ce que la quantité de carbone ajoutée dans la première étape est telle que la scorie présente une teneur en plomb comprise entre 10 et 60% à la fin de la première étape.

8. Procédé de récupération du plomb selon la revendication 1, caractérisé en ce qu'on traite la matière active provenant de batteries usagées ayant la composition suivante en pourcentage en poids :
- plomb 60 à 90%
- soufre 2 à 8%
- carbone 0 à 4%
le pourcentage restant étant constitué de l'oxygène, d'autres métaux, des éléments présents, autres que le carbone, dans les composés organiques et de matières scorifiables.

9. Procédé de récupération du plomb selon la revendication 8, caractérisé en ce que la teneur en carbone présent lors de l'étape a) est comprise entre 2 et 4% et de préférence environ 3%.

10. Procédé de récupération du plomb selon l'une des revendications précédentes, caractérisé en ce que la quantité de carbone ajoutée dans la seconde étape est comprise entre 5 et 30% en poids par rapport à la quantité de PbO formé dans la première étape et qui est présente dans la phase de scorie.

11. Procédé de récupération du plomb selon la revendication 1, caractérisé en ce qu'on ajoute lors de la première étape un fondant comportant de préférence de l'oxyde de fer, de l'oxyde de calcium et éventuellement de la silice.

12. Four électrique à électrodes immergées pour mettre en oeuvre le procédé selon l'une des revendications 1 à 11 , comportant une cuve (2) munie d'un ou plusieurs moyens (3) d'évacuation du plomb d'oeuvre, un ou plusieurs moyens (4) d'évacuation de la phase de scories, un ou plusieurs moyens d'évacuation du gaz, et des moyens d'introduction des différentes matières.

13. Four électrique selon la revendication 12, caractérisé en ce que la cuve comprend une zone de siphon pour récupérer le plomb d'oeuvre, comportant éventuellement le retour de courant.
